# EUROPEAN PATENT APPLICATION

(11) **EP 2 615 788 A1**
(43) Date of publication of application: **17.07.2013**
(21) Application number: 11824483.9
(22) Date of filing: 24.05.2011
(51) Int. Cl.: H04L 29/06, H04L 12/14

(54) **METHOD FOR DUAL STACK USER MANAGEMENT AND BROADBAND ACCESS SERVER**

(30) Priority: 15.09.2010 CN 201010283605
(71) Applicant: ZTE Corporation, Shenzhen, Guangdong 518057 (CN)
(72) Inventor: FAN, Liang, Shenzhen Guangdong 518057 (CN); YUAN, Bo, Shenzhen Guangdong 518057 (CN)
(74) Representative: Jansen, Cornelis Marinus
(86) International application number: PCT/CN2011/074604
(87) International publication number: WO 2012/034413

(57) **Abstract**

The disclosure provides a method for dual-stack user management and a broadband access server. The method includes the following steps: a broadband access server receives a dual-stack access request from a user, determining that the user currently requesting access has one or more requests successfully authenticated, and directly distributes authorization information to the user. In the disclosure, when a dual-stack user that has requested access and is successfully authenticated initiates authentication of a second protocol stack, authorization information is directly distributed to the user, so that the quality of service of the user and the experience of service of the user are improved, thus the evolution of the network of operators to IPv6 is promoted. In addition, the disclosure can charge the addresses of two protocol stacks of the access user in a respective or unified way. The charging manner is flexible and better meets the needs of the user.

## Description

### TECHNICAL FIELD

The disclosure relates to dual-stack access technique in broadband networks, and in particular to a method for dual-stack user management and a broadband access server.

### BACKGROUND

With the rapid development of Internet, the address space defined by current Internet Protocol version 4 (IPv4) address protocol is confronting a risk of exhaustion. Although some technique for delaying the address exhaustion has appeared at present, such as Network Address Translation (NAT), the defects in address control would inevitably block the further development of Internet.

The appearance of Internet Protocol version 6 (IPv6) address greatly increases the space of network address, and can well resolve the problem of exhaustion of IPv4 address space; meanwhile, the IPv6 technique also takes other problems existing in the IPv4 technique into account, for example, security, Service of Quality (QoS), mobility and the like. Therefore, the IPv6 technique has very broad application scenes; at present, major network operators around the world have put forward a plan about evolution to IPv6.

During the evolution process of current pure IPv4 network to future pure IPv6 network, dual-stack access technique is one of the main evolution methods.

In a dual-stack access scene, each user has a dual-stack address, including an IPv4 address and an IPv6 address. The user accesses IPv4 network resources using the IPv4 address, and accesses IPv6 network resources using the IPv6 address; in this way, network resources can be migrated to IPv6 from IPv4 gradually, meanwhile, the user address evolves from dual stack to IPv6 single stack gradually.

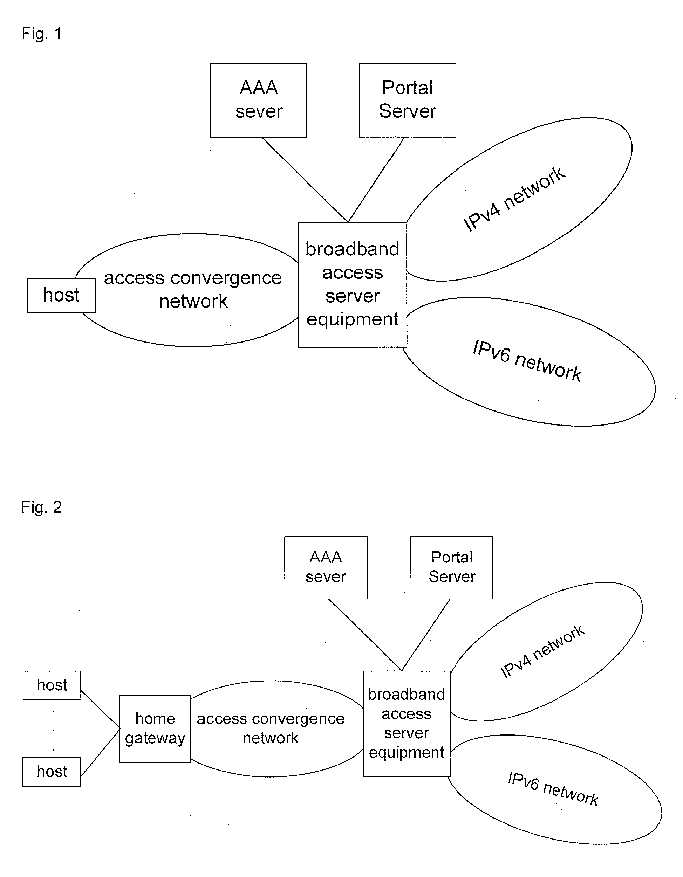

Fig. 1 shows a network topology used by a dual-stack user management method; Fig. 2 shows another network topology used by a dual-stack user management method; the difference between Fig. 1 and Fig. 2 lies in whether a dual-stack user (for example, a host) performs an access through a home gateway, that is to say, the user shown in Fig. 1 is one same host, while the user shown in Fig. 2 is different hosts in one same home.

At present, the dual-stack user management method introduced by dual-stack access approximately is: a broadband access server, for example, a Broadband Network Gateway (BNG), a Broadband Remote Access Server (BRAS) or a Broadband Access Server equipment (BAS), processes an IPv4 address request and an IPv6 address request from a user respectively; that is to say, the IPv4 address request and the IPv6 address request from the user are authenticated, authorized and charged respectively. In this way, one same user needs to be authenticated twice, with complex authentication; moreover, the IPv4 address and the IPv6 address can be charged respectively only, with inflexible charging.

From relevant art, it can be seen that the dual-stack user management mode introduced by dual-stack access reduces the quality of service of users and the experience of service of users and thus impacts the evolution of the network of operators to IPv6.

### SUMMARY

In view of the above, the main purpose of the disclosure is to provide a method for dual-stack user management and a broadband access server, which can improve the quality of service of users and the experience of service of users and thus promote the evolution of the network of operators to IPv6.

In order to achieve the purpose above, the technical scheme of the disclosure is implemented as follows.

A method for dual-stack user management is provided, which includes:
receiving an access request from a user by a broadband access server, and, if the user currently requesting access has one or more access requests successfully authenticated, directly distributing authorization information to the user by the broadband access server.

Determining that the user currently requesting access has one or more access requests successfully authenticated may include:
comparing key information carried in the access request with key information of an online user of the broadband access server, if key information of the user successfully authenticated stored in the broadband access server itself includes the key information of the user requesting access, determining, by the broadband access server, that the user currently requesting access is a user successfully authenticated.

The user has sent a first protocol stack access request and is successfully authenticated, the broadband access server stores authorization information of the first protocol stack and authorization information of a second protocol stack of the user;
directly distributing authorization information to the user may include: directly distributing, by the broadband access server, authorization information of the second protocol stack stored by the broadband access server to the user.

The user has sent a first protocol stack access request and is successfully authenticated, the broadband access server stores authorization information of the first protocol stack;
directly distributing authorization information to the user may include: acquiring authorization information of a second protocol stack from an authentication server and then sending the authorization information of the second protocol stack directly to the user, by the broadband access server.

If the key information of the online user of the broadband access server does not include the key information of the user currently requesting access, then current access request of the user is a first protocol stack access request; the method further may include:
authenticating the request of the user by the broadband access server.

The key information may be user related information;
the user related information may include one or any combination of the following: Media Access Control (MAC) address of a user, Virtual Local Area Network (VLAN) information of a request message, QinQ VLAN information of a request message, location information of a user.

The first protocol stack access request may be an access request first initiated by one same dual-stack user, and may be an Internet Protocol version 4 (IPv4) access request or an Internet Protocol version 6 (IPv6) access request; and
a second protocol stack access request may be an access request later initiated by one same dual-stack user, and may be an IPv6 access request or an IPv4 access request.

An access mode of the IPv4 access request of the user is a Point to Point Protocol (PPP) mode, or a Dynamic Host Configuration Protocol for IPv4 (DHCPv4) mode;
when the user performs access in the DHCPv4 mode, an access authentication mode may be a Portal mode, or a mode that the broadband access server extracts a key word from a user request to initiate authentication to the authentication server;
an access mode of the IPv6 access request of the user may be a Point to Point Protocol for IPv6 (PPPv6) mode, or a Neighbour Discover (ND) mode, or a Dynamic Host Configuration Protocol for IPv6 (DHCPv6) mode.

The user may be a dual-stack user; and the dual-stack user may be one same host, or different hosts in one same home.

The method further may include: charging, by the broadband access server, addresses of two protocol stacks of the access user in a respective or unified way.

The charging may be respective charging, including: sending a charging start request for the first protocol stack access request and a second protocol stack access request from the user, respectively; when a first protocol stack session terminates or a second protocol stack session terminates, sending a charging stop request respectively;
wherein the session termination may mean: active offline of the user, or offline due to session detection timeout, or expiration of session lease.

The charging may be unified charging, including: sending a charging start request for the first protocol stack access request from the user; when both a first protocol stack session and a second protocol stack session of the user terminate, sending a charging stop request.

A broadband access server is provided, which at least includes an access processing module, an authorization confirmation module and a storage module, wherein
the access processing module is configured to: receive an access request from a user, search the storage module for key information of an online user, determine that the user currently requesting access has one or more requests successfully authenticated, send an authentication success notification to the authorization confirmation module, and carry authorization information of a second protocol stack of the user acquired from the storage module or from an authentication server;
the authorization confirmation module is configured to receive the authentication success notification from the access processing module and to acquire from the authentication success notification the authorization information of the second protocol stack of the user and to distribute the authorization information of the second protocol stack to the user; and
the storage module is configured to store user related information including key information of the user, and authorization information of the first protocol stack and the second protocol stack of the user.

The broadband access server further may include: an authentication module, which is configured to authenticate a first protocol stack access request from the user, and after the authentication succeeds, to store the authorization information of the first protocol stack in the storage module or to store the authorization information of the first protocol stack and the authorization information of the second protocol stack of the user in the storage module.

The access processing module may be further configured to request the authentication module to authenticate the current request of the user when not searching out key information of the user currently requesting access from the storage module.

The broadband access server further may include a first charging module and/or a second charging module, wherein
the first charging module is configured to send a charging start request for a first protocol stack access request from the user when receiving a unified charging instruction, and to send a charging stop request when both a first protocol stack session and a second protocol stack session of the user terminate; and
the second charging module is configured to respectively send a charging start request for a first protocol stack access request and a second protocol stack access request from the user when receiving a respective charging instruction, and to send a charging stop request respectively when a first protocol stack session or a second protocol stack session of the user terminates.

From the above technical scheme provided by the disclosure, it can be seen that a broadband access server receives a dual-stack access request from a user, determines that the user currently requesting access has one or more requests successfully authenticated and directly distributes authorization information to the user. From the dual-stack user management mode of the disclosure, it can be seen that when the dual-stack user that has requested for access and is successfully authenticated initiates authentication of a second protocol stack, the authorization information is directly distributed to the user, so that the quality of service of the user and the experience of service of the user are improved, thus the evolution of the network of operators to IPv6 is promoted.

In addition, the disclosure can charge the addresses of two protocol stacks of an access user in a respective or unified way. The charging manner is flexible and better meets the needs of the user.

### BRIEF DESCRIPTION OF THE DRAWINGS

Fig. 1 shows a network topology used by a dual-stack user management method;
Fig. 2 shows another network topology used by the dual-stack user management method;
Fig. 3 shows a flowchart of a method for dual-stack user management according to the disclosure;
Fig. 4 shows a structure diagram of a broadband access server according to the disclosure;
Fig. 5 shows a flowchart of a first embodiment of the method for dual-stack user management according to the disclosure;
Fig. 6 shows a flowchart of a second embodiment of the method for dual-stack user management according to the disclosure; and
Fig. 7 shows a flowchart of a third embodiment of the method for dual-stack user management according to the disclosure.

### DETAILED DESCRIPTION

In this application, an access request initiated by a dual-stack user is called a dual-stack access request, wherein the dual-stack access request includes a first protocol stack access request and a second protocol stack access request. The first protocol stack access request is an access request first initiated by one same user, and may be an IPv4 access request or an IPv6 access request; correspondingly, the second protocol stack access request is an access request later initiated by one same user, and may be an IPv6 access request or an IPv4 access request.

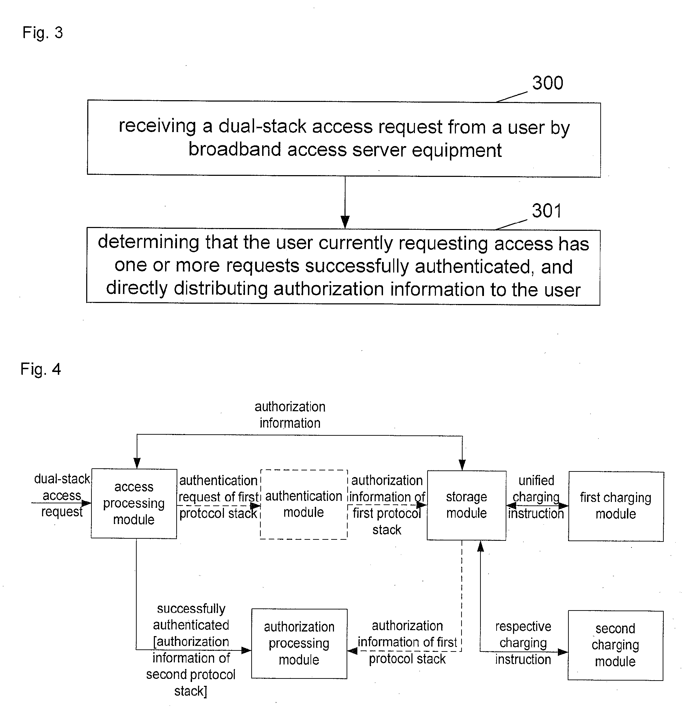

Fig. 3 shows a flowchart of a method for dual-stack user management according to the disclosure; as shown in Fig. 3, the method includes the following steps.

Step 300: A broadband access server receives a dual-stack access request from a user.

In this step, the dual-stack access request may be a first protocol stack access request or a second protocol stack access request. The access request carries user related information (called key information in this application), such as an MAC address of the user, and/or VLAN information of a request message, and/or QinQ VLAN information of a request message, and/or location information of the user (for example, DHCPv4, location information Option 82 of the user (one of DHCPv4 options)) and the like. The key information might be added to the access request message of the user by user access equipment (the equipment including Digital Subscriber Line Access Multiplexer (DSLAM), Optical Line Terminal (OLT), Ethernet switch and the like).

Wherein the first protocol stack access request is the access request first initiated by one same dual-stack user, and may be an IPv4 access request or an IPv6 access request; correspondingly, the second protocol stack access request is the access request later initiated by one same dual-stack user, and may be an IPv6 access request or an IPv4 access request.

The access mode of the IPv4 access request of the user can be a Point to Point Protocol (PPP) mode, or a DHCPv4 mode. When the user performs access in the DHCPv4 mode, the access authentication mode can be a Portal authentication mode (one of the authentication modes of DHCPv4, in which HTTP access requests initiated before the user is successfully authenticated would be redirected to the authentication page of the Portal server), or a mode that the broadband access server extracts a key word from the user request to initiate authentication to the authentication server; the IPv6 access mode of the user can be a Point to Point Protocol for IPv6 (PPPv6) mode, or a Neighbor Discover (ND) mode, or a Dynamic Host Configuration Protocol for IPv6 (DHCPv6) mode.

In the disclosure, the user refers to a dual-stack user, and may be one same host or different hosts in one same home. That is to say, the scheme provided by the disclosure not only suits the scene in which a single user host has IPv4 address access and IPv6 address access simultaneously, but also suits the Dual-Stack Lite (DS-Lite) application scene in which multiple IPv4 and/or IPv6 hosts access network through a home gateway of IPv6.

Step 301: the user currently requesting access is determined to be a user successfully authenticated, and authorization information is directly distributed to the user. That is to say, the user currently requesting access has one or more requests successfully authenticated.

In this step, key information carried in the access request is compared with the key information of an online user of the broadband access server, if the key information of the online user of the broadband access server includes the key information of the user currently requesting access, it is indicated that the dual-stack user currently requesting access has requested access to another protocol stack (the access request first initiated is called a first protocol stack access request) and is successfully authenticated before the current access is performed (the access request later initiated is called a second protocol stack access request). At this time, the broadband access server determines that the user currently requesting access is a user successfully authenticated.

Before this method, the user has sent a first protocol stack access request and is successfully authenticated; the broadband access server stores the authorization information of two protocol stacks of the user. Then, directly distributing authorization information to the user in Step 301 includes: the broadband access server directly distributes the authorization information of the second protocol stack stored by the broadband access server to the user; or,
before this method, the user has sent a first protocol stack access request and is successfully authenticated, the broadband access server stores the authorization information of the first protocol stack. Then, directly distributing authorization information to the user in Step 301 includes: the broadband access server acquires the authorization information of the second protocol stack from an authentication server and sends the authorization information of the second protocol stack directly to the user.

The method further includes: if the key information of the user successfully authenticated stored by the broadband access server does not include the key information of the user currently requesting access, the current access request of the dual-stack user is determined to be a request for access to the first protocol stack; and the user request is authenticated by an existing method.

The method further includes: the broadband access server charges the addresses of two protocol stacks of the access user in a respective or unified way.

Respective charging includes: sending a charging start request respectively for the first protocol stack access request and the second protocol stack access request from the user; when a first protocol stack session terminates or a second protocol stack session terminates, sending a charging stop request respectively; the session termination means: active offline of the user, or offline due to session detection timeout, or expiration of session lease.

Unified charging includes: sending a charging start request for the first protocol stack access request from the user; when both the first protocol stack session and the second protocol stack session of the user terminate, sending a charging stop request to the charging server.

The specific implementation of charging belongs to common technical means for those skilled in the art, and does not limit the scope of protection of the disclosure, and no further description is needed here.

From the method for dual-stack user management in the disclosure, it can be seen that when a dual-stack user that has requested access and is successfully authenticated initiates authentication of a second protocol stack, the authorization information is directly distributed to the user, so that the quality of service of the user and the experience of service of the user are improved, thus the evolution of the network of operators to IPv6 is promoted. In addition, the disclosure can charge the addresses of two protocol stacks of the access user in a respective or unified way. The charging manner is flexible and better meets the needs of the user.

In view of the method of the disclosure, a broadband access server is provided which, as shown in Fig. 4, at least includes an access processing module, an authorization confirmation module and a storage module, wherein
the access processing module is configured to: receive a dual-stack access request from a user, search key information of an online user from the storage module, determine that the user currently requesting access has one or more requests successfully authenticated if the key information of the user is searched out, send an authentication success notification to the authorization confirmation module, and carry authorization information of a second protocol stack of the user acquired from the storage module or from an authentication server;
the authorization confirmation module is configured to receive the authentication success notification from the access processing module and to acquire from the authentication success notification the authorization information of the second protocol stack of the user and to distribute the authorization information of the second protocol stack to the user; and
the storage module is configured to store information of an online user, user related information including key information of the user, and the authorization information of the first protocol stack and the second protocol stack of the user.

The broadband access server further includes: an authentication module, which is configured to authenticate the first protocol stack access request from the user, and after the authentication succeeds, to store the authorization information of the first protocol stack in the storage module or to store the authorization information of the first protocol stack and the authorization information of the second protocol stack of the user in the storage module.

The access processing module of the broadband access server is further configured to request the authentication module to authenticate the current request (that is, the first protocol stack access request) from the user when not searching out the key information of the user currently requesting access from the storage module.

The broadband access server further includes a first charging module and/or a second charging module, wherein
the first charging module is configured to send a charging start request for the first protocol stack access request from the user when receiving a unified charging instruction, and to send a charging stop request when both a first protocol stack session and a second protocol stack session of the user terminate. Here, the unified charging or respective charging can adopt a preconfigured instruction, that is, the charging mode is preconfigured before the user requests access, for example, a user selects the unified charging or respective charging as a charging mode when starting services.

The second charging module is configured to send a charging start request for the first protocol stack access request and the second protocol stack access request from the user respectively when receiving a respective charging instruction, and to send a charging stop request respectively when the first protocol stack session or the second protocol stack session of the user terminates.

The method of the disclosure is described below in further detail in conjunction with specific embodiments.

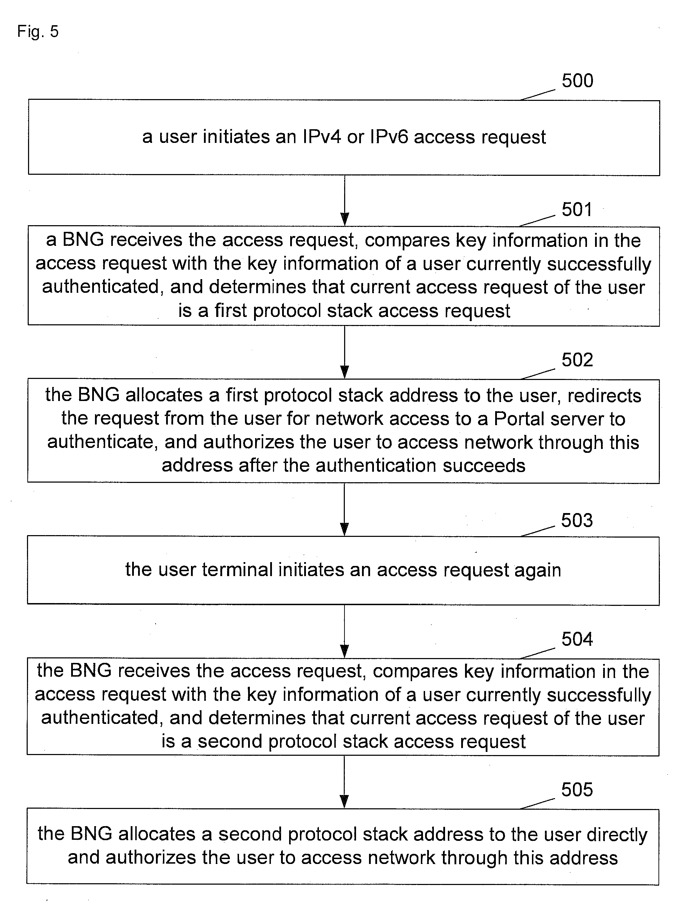

Fig. 5 shows a flowchart of a first embodiment of the method for dual-stack user management according to the disclosure; in the first embodiment, supposing a user accesses an IPv4 session in a DHCPv4 mode and accesses an IPv6 session in an ND mode, the authentication mode of both IPv4 session and IPv6 session is Portal authentication, and the broadband access server is an BNG. As shown in Fig. 5, the specific process includes the following steps:
Step 500: a user terminal first initiates an IPv4 or IPv6 access request;
Step 501: after receiving the request, the BNG extracts key information from the request message, compares the extracted key information with the key information of a user currently successfully authenticated, and determines that the access request of the user is a first protocol stack access request if the key information of the user currently successfully authenticated does not include the key information carried in the request message;
Step 502: the BNG allocates a first protocol stack address to the user, redirects the request from the user for network access to a Portal server to authenticate, and authorizes the user to access network through this address after the authentication succeeds; the specific implementation of this step belongs to known techniques for those skilled in the art, and no further description is needed here;
Step 503: supposing this user terminal initiates an access request again;
Step 504: after receiving the request, the BNG extracts key information from the request message, compares the extracted key information with the key information of a user currently successfully authenticated, and determines that the access request of the user is a second protocol stack access request if the key information of the user currently successfully authenticated includes the key information carried in the request message; and
Step 505: the BNG allocates a second protocol stack address to the user directly and authorizes the user to access network through this address. From this step, it can be seen that the BNG does not execute the authentication of the user after determining that the access request initiated by the user is a second protocol stack access request, but allocates the second protocol stack address to the user directly and authorizes the user to access network through this address. In this way, the quality of service of the user and the experience of service of the user are improved, thus the evolution of the network of operators to IPv6 is promoted.

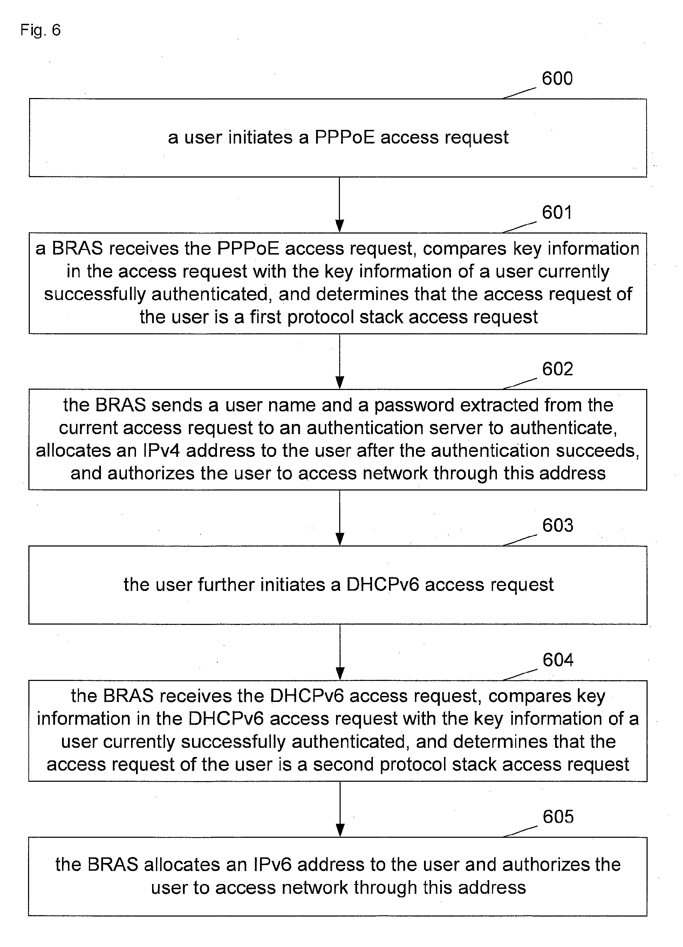

Fig. 6 shows a flowchart of a second embodiment of the method for dual-stack user management according to the disclosure; in the second embodiment, supposing a user accesses an IPv4 session in a Point to Point protocol over Ethernet (PPPoE) mode and accesses an IPv6 session in a DHCPv6 mode, and the broadband access server is a BRAS. As shown in Fig. 6, the specific implementation includes the following steps:
Step 600: a user first initiates a PPPoE access request;
Step 601: after receiving the PPPoE access request, the BRAS extracts key information carried in the request message, compares the extracted key information with the key information of a user currently successfully authenticated, and determines that the access request of the user is a first protocol stack access request if the key information of the user currently successfully authenticated does not include the key information carried in the request message;
Step 602: the BRAS sends a user name and a password extracted from the current access request to an authentication server to authenticate, allocates an IPv4 address to the user after the authentication succeeds, and authorizes the user to access network through this address; the specific implementation of this step belongs to known techniques for those skilled in the art, and no further description is needed here.
Step 603: supposing this user further initiates a DHCPv6 access request;
Step 604: after receiving the DHCPv6 access request, the BRAS extracts key information carried in the access request, compares the extracted key information with the key information of a user currently successfully authenticated, and determines that the access request of the user is a second protocol stack access request if the key information of the user currently successfully authenticated includes the key information carried in the request message; and
Step 605: the BRAS allocates an IPv6 address to the user and authorizes the user to access network through this address.

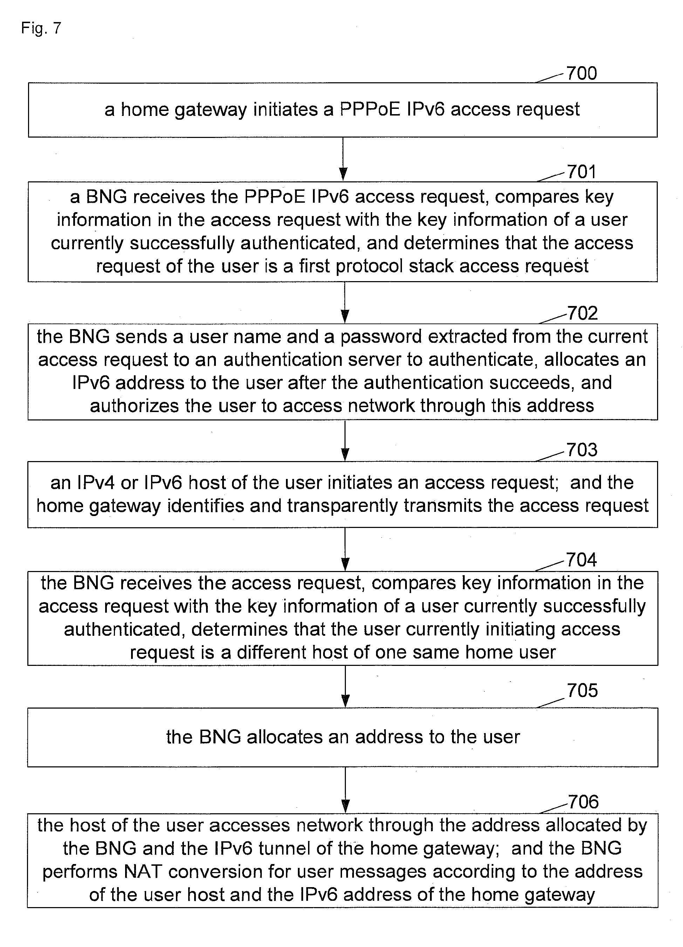

Fig. 7 shows a flowchart of a third embodiment of the method for dual-stack user management according to the disclosure; in the third embodiment, supposing, in the scene of DS-Lite, multiple IPv4 or IPv6 hosts of a user are connected to a broadband access server through a home gateway, an IPv6 tunnel is established between a home gateway and the broadband access server, and the home gateway itself is an IPv6 user. As shown in Fig. 7, the specific implementation includes the following steps:
Step 700: the home gateway first initiates a PPPoE IPv6 access request;
Step 701: after receiving the PPPoE IPv6 access request, a BNG extracts key information carried in the access request, compares the extracted key information with the key information of a user currently successfully authenticated, and determines that the access request of the user is a first protocol stack access request if the key information of the user currently successfully authenticated does not include the key information carried in the request message.
Step 702: the BNG sends a user name and a password extracted from the current access request to an authentication server to authenticate, allocates an IPv6 address to the user after the authentication succeeds, and authorizes the user to access network through this address;
Step 703: the IPv4 or IPv6 host of the user initiates an access request, and the home gateway identifies and transparently transmits the access request;
Step 704: after receiving the access request, the BNG extracts key information carried in the request message, compares the extracted key information with the key information of a user currently successfully authenticated, and determines that the user currently initiating access request is a different host of one same home user;
Step 705: the BNG allocates an address to the user; and
Step 706: the host of the user accesses network through the address allocated by the BNG and the IPv6 tunnel of the home gateway; and the BNG performs NAT conversion for user messages according to the address of the user host and the IPv6 address of the home gateway.

The above are only the preferred embodiments of the disclosure and not intended to limit the scope of protection of the disclosure. Any modification, equivalent substitute and improvement made within the spirit and principle of the disclosure are deemed to be included within the scope of protection of the disclosure.

## Claims

1. A method for dual-stack user management, comprising:
receiving an access request from a user by a broadband access server, and, if the user currently requesting access has one or more access requests successfully authenticated, directly distributing authorization information to the user by the broadband access server.

2. The method for dual-stack user management according to claim 1, wherein determining that the user currently requesting access has one or more access requests successfully authenticated comprises:
comparing key information carried in the access request with key information of an online user of the broadband access server, if key information of a user successfully authenticated stored in the broadband access server itself includes the key information of the user requesting access, determining, by the broadband access server, that the user currently requesting access is a user successfully authenticated.

3. The method for dual-stack user management according to claim 2, wherein the user has sent a first protocol stack access request and is successfully authenticated, the broadband access server stores authorization information of the first protocol stack and authorization information of a second protocol stack of the user;
directly distributing authorization information to the user comprises: directly distributing, by the broadband access server, authorization information of the second protocol stack stored by the broadband access server to the user.

4. The method for dual-stack user management according to claim 2, wherein the user has sent a first protocol stack access request and is successfully authenticated, the broadband access server stores authorization information of the first protocol stack;
directly distributing authorization information to the user comprises: acquiring authorization information of a second protocol stack from an authentication server and then sending the authorization information of the second protocol stack directly to the user, by the broadband access server.

5. The method for dual-stack user management according to claim 2, wherein if the key information of the online user of the broadband access server does not include the key information of the user currently requesting access, then current access request of the user is a first protocol stack access request; the method further comprises:
authenticating the request of the user by the broadband access server.

6. The method for dual-stack user management according to claim 2 or 5, wherein the key information is user related information;
the user related information comprises one or any combination of the following: Media Access Control (MAC) address of a user, Virtual Local Area Network (VLAN) information of a request message, Double VLAN (QinQ VLAN) information of a request message, location information of a user.

7. The method according to claim 3 or 4, wherein the first protocol stack access request is an access request first initiated by one same dual-stack user, and is an Internet Protocol version 4 (IPv4) access request or an Internet Protocol version 6 (IPv6) access request; and
a second protocol stack access request is an access request later initiated by the one same dual-stack user, and is an I Pv6 access request or an I Pv4 access request.

8. The method for dual-stack user management according to claim 7, wherein an access mode of the IPv4 access request of the user is a Point to Point Protocol (PPP) mode, or a Dynamic Host Configuration Protocol for IPv4 (DHCPv4) mode;
when the user performs access in the DHCPv4 mode, an access authentication mode is a Portal authentication mode, or a mode that the broadband access server extracts a key word from a user request to initiate authentication to the authentication server;
an access mode of the IPv6 access request of the user is a Point to Point Protocol for IPv6 (PPPv6) mode, or a Neighbour Discover (ND) mode, or a Dynamic Host Configuration Protocol for IPv6 (DHCPv6) mode.

9. The method for dual-stack user management according to claim 8, wherein the user is a dual-stack user; and the dual-stack user is one same host, or different hosts in one same home.

10. The method for dual-stack user management according to claim 1, further comprising: charging, by the broadband access server, addresses of two protocol stacks of the access user in a respective or unified way.

11. The method for dual-stack user management according to claim 10, wherein the charging is respective charging, comprising: sending a charging start request for a first protocol stack access request and a second protocol stack access request from the user, respectively; when a first protocol stack session terminates or a second protocol stack session terminates, sending a charging stop request respectively;
wherein the session termination means: active offline of the user, or offline due to session detection timeout, or expiration of session lease.

12. The method for dual-stack user management according to claim 10, wherein the charging is unified charging, comprising: sending a charging start request for a first protocol stack access request from the user; when both a first protocol stack session and a second protocol stack session of the user terminate, sending a charging stop request.

13. A broadband access server, at least comprising an access processing module, an authorization confirmation module and a storage module, wherein
the access processing module is configured to: receive an access request from a user, search the storage module for key information of an online user, determine that the user currently requesting access has one or more requests successfully authenticated, send an authentication success notification to the authorization confirmation module, and carry authorization information of a second protocol stack of the user acquired from the storage module or from an authentication server;
the authorization confirmation module is configured to receive the authentication success notification from the access processing module and to acquire from the authentication success notification the authorization information of the second protocol stack of the user and to distribute the authorization information of the second protocol stack to the user; and
the storage module is configured to store user related information including key information of the user, and authorization information of the first protocol stack and the second protocol stack of the user.

14. The broadband access server according to claim 13, further comprising: an authentication module, which is configured to authenticate a first protocol stack access request from the user, and after the authentication succeeds, to store the authorization information of the first protocol stack in the storage module or to store the authorization information of the first protocol stack and the authorization information of the second protocol stack of the user in the storage module.

15. The broadband access server according to claim 14, wherein the access processing module is further configured to request the authentication module to authenticate the current request of the user when not searching out key information of the user currently requesting access from the storage module.

16. The broadband access server according to any one of claims 13 to 15, further comprising a first charging module and/or a second charging module, wherein
the first charging module is configured to send a charging start request for a first protocol stack access request from the user when receiving a unified charging instruction, and to send a charging stop request when both a first protocol stack session and a second protocol stack session of the user terminate; and
the second charging module is configured to respectively send a charging start request for a first protocol stack access request and a second protocol stack access request from the user when receiving a respective charging instruction, and to send a charging stop request respectively when a first protocol stack session or a second protocol stack session of the user terminates.
